# EUROPÄISCHE PATENTSCHRIFT

(11) **EP 1 374 627 B1**
(45) Veröffentlichungstag und Bekanntmachung des Hinweises auf die Patenterteilung: **25.08.2004**
(21) Anmeldenummer: 01913455.0
(22) Anmeldetag: 26.03.2001
(51) Int. Cl.: H04Q 11/04, H04L 12/56

(54) **VERFAHREN UND SYSTEM ZUM EFFIZIENTEN VERWALTEN VON RESSOURCEN IN MPLS NETZWERKEN**
METHOD AND SYSTEM FOR EFFICIENT MANAGEMENT OF RESOURCES IN MPLS NETWORKS
PROCEDE ET SYSTEME PERMETTANT UNE GESTION EFFICACE DES RESSOURCES DANS DES RESEAUX MPLS

(43) Veröffentlichungstag der Anmeldung: 02.01.2004
(73) Patentinhaber: Swisscom Fixnet AG, 3050 Bern (CH)
(72) Erfinder: LAMTI BEN-YACOUB, Leila, CH-3014 Bern (CH)
(74) Vertreter: BOVARD AG - Patentanwälte
(86) Internationale Anmeldenummer: PCT/CH2001/000185
(87) Internationale Veröffentlichungsnummer: WO 2002/078387

(56) Entgegenhaltungen:
- WO-A-00/76148
- US-A- 6 011 804

## Beschreibung

Die vorliegende Erfindung beschreibt ein System und Verfahren zum Verwalten von Netzwerkressourcen in Multiprotokoll-Netzwerken mit protokollspezifischen Datenwegen, bei welchem Verfahren eine Datenerfassungseinheit zu erfassende und/oder zu verrechnende Datenpakete überprüft, den Datenpaketen Kontrolldaten zuordnet und die Kontrolldaten an ein Vermittlungsmodul übergibt. Das Vermittlungsmodul wertet die den Datenpaketen zugeordneten Kontrolldaten anhand von Kontrollfunktionen aus, wobei die Kontrollfunktionen mindestens Kontrollfunktionen zum Verwalten von mit einem Netzwerkbenutzer vereinbarten Netzwerkserviceleistungen umfassen. Insbesondere beschreibt die Erfindung ein System und Verfahren, bei welchem das Netzwerk ein IP-Backbone-Netzwerk mit Multi Protokoll Label Switching basierenden Label Switched Routers umfasst und es sich bei den Datenwege um entsprechende Label Switched Paths handelt.

Viele gegenwärtige Anwendungen wie CAD/CAM, wissenschaftliche Visualisierung, Dokumentenverwaltung, Publishing, Intra/Internet Services (z.B. HTTP (HyperText Transfer Protocol), FTP (File Transfer Protocol) etc.) oder Backups über das Netz produzieren einen stetig wachsenden Bandbreitenbedarf. Das Auftauchen einer neuen Generation von Anwendungen - multimediale Dienste wie z.B. Videokonferenzen oder Video/Audio in Webseiten - tun ein Übriges. Im Gefolge dieser Entwicklungen wachsen ständig leistungsfähigere Netzwerktechnologien nach, die aber nur mit Mühe mit der Entwicklung Schritt halten können. Bei vielen Entwicklungen handelt es sich zumeist um Erweiterungen traditioneller LAN-Technologien (LAN: Local Area Network), wie des Fast Ethernet oder das gerade aktuelle Gigabit Ethernet. Neben dem weniger erfolgreichen Glasfaser-Hochgeschwindigkeitsnetz FDDI (Fiber Distributed Data Interface), das sich an die Token-Ring-Architektur anlehnt, haben sich Technologien wie ATM oder Frame-Relay durchgesetzt. So benutzen zum heutigen Zeitpunkt Netzwerkanbieter, wie z.B. Internetprovider, um geographisch verstreute Netzwerkbenutzer zusammenzuschliessen, meist gemietete Standleitungen, Frame-Relay (FR) oder ATM (Asynchron Transfer Mode) end-to-end virtuelle Links. Für viele Anwendungen ist es heute entscheidend, dass gemietete Standleitungen oder ATM/FR end-to-end virtuelle Links festgelegte Quality of Service (QoS) Parameter (wie z.B. end-to-end Zeitverzögerung, Datenpaketverlustrate und zeitliche Instabilität oder Signalschwankungen) innerhalb einer festgelegten Abweichung garantieren können. Das Garantieren von festgelegten QoS Parameter war im traditionellen Backbone-Netz keineswegs eine Selbstverständlichkeit. Das Internet Protokoll (IP) und die Architektur des Internets selbst basiert nämlich auf dem einfachen Konzept, dass einzelne Datenpakete oder Datagramme mit zugeordneter Herkunfts- und Zieladresse das Netz von IP-Routern unabhängig voneinander und ohne die Hilfe ihres Senders oder Empfängers durchqueren können. Dies stammt daher, dass das Internet mit seiner Backbone-Struktur historisch als Dump-Netzwerk mit jeweils intelligenten Endgeräten beim Sender und beim Empfänger gebaut wurde. Der Preis für die Einfachheit und gleichzeitig der Grund für seine Einfachheit ist jedoch, dass IP nicht sehr viele Dienst bietet. IP unterstützt nur das Adressieren der Datenpakete und dies erlaubt ihre Unabhängigkeit im Netz. IP kann zusätzlich die Datenpakete (in Routers) fragmentieren und wieder (beim Empfänger) zusammenfügen, was auch das Überbrücken unterschiedlicher Netzwerkmedien erlaubt. Aber IP bietet keine zuverlässige Datenübertragung. Routers dürfen unterwegs Datenpakete ohne Benachrichtigung des Senders oder des Empfängers streichen oder nicht weiterleiten. IP muss sich deshalb auf höher-level Transportprotokolle, wie z.B. TCP (Transfer Control Protocol), stützen, um die Datenpakete im Netz zu kontrollieren und wie benötigt zu übermitteln. Solche Sicherheitsmechanismen basierend auf IP können nur den blossen Datentransfer garantieren; weder IP noch die höher-level Protokolle basierend auf IP können Zeit oder Datendurchsatz der Datenübertragung garantieren. IP ist nur einen sog. "best effort" Dienst, garantiert aber nicht, wann und wieviel Daten übertragen werden. Für traditionelle Internetanwendungen wie z.B. das Web, elektronische Mail, Filetransfer etc. waren die genannten Limitierungen kein Hindernis. Aber viele neue Anwendungen, wie z.B. Audio- und Videostreaming, beanspruchen eine hohe Datendurchsatzkapazität (Bandbreite) und benötigen eine kleine Latenz, falls sie in bidirektionaler Kommunikation (wie z.B. Videokonferenzen oder Fernsprechwesen/Telefonie etc.) benutzt werden. Ein weiterer Punkt ist, dass öffentliche und private IP-Netze zudem immer mehr dazu benutzt werden, um kritische Informationen zu übermitteln, welche keinen unvorhergesehenen Datenverlust ertragen. Im Unterschied zu den reinen "virtual circuit" Technologien, wie dem erwähnten ATM und Frame Relay, macht IP eben keine feste Zuteilung von Ressourcen. Dagegen erlaubt genau dies beim IP aber einen viel effizientere Ausnutzung der verfügbaren Bandbreite (da bei IP die Netzwerkressourcen nicht fest alloziert werden), und macht IP auch anderweitig flexibler als z.B. ATM oder Frame Relay. Typischer Netzwerkverkehr ist nämlich eher unstetig aufbrausend als kontinuierlich flach. IP ist Datenpaket-basierend, so dass es die verfügbare Bandbreite effizient ausnutzen kann, indem es das was verfügbar ist, benutzt. So kann IP viel flexibler an die verschiedenen Bedürfnisse von Anwendungen angepasst werden. IP führt jedoch auch zu der beschriebenen Unvorhersehbarkeit und Unsicherheit bei den angebotenen Diensten. Diese Vor- und Nachteile des IP stehen im Gegensatz zu Lösungen wie die "virtual circuit" Technologien, die Netzwerkressourcen fest zuteilen. Gemietete Standleitungen, ATM oder Frame Relay sind zwar kostenaufwendig und die benutzten Bandbreiten sind nicht skalierbar (es braucht einen Netzwerkoperator, um ein Netzwerk von Datenpfaden, welches durch end-to-end Links mit allen Benutzerstandorten vollständig vernetzt ist, zu erstellen), sie können aber festgelegte Quality of Service Parameter wie minimale Übertragungsverzögerung, minimale Übertragungsabweichung Mindestdatendurchsatz oder Mindestdatenübertragungsrate garantieren.

Im Stand der Technik finden sich verschiedene Lösungsansätze zu den oben beschriebenen Problemen, um dem explodierenden Wachstum der IP Virtual Private Network (IP-VPN) Stand halten zu können. Eine einfache Lösung basierend auf IP wäre, dass die IP-Netzwerk-Operatoren point-to-point Service Level Agreements (SLAs) ihren Netzwerk-Kunden bieten würde. Dies würde bedeuten, dass end-to-end IP virtuelle Datentunnels zwischen den Benutzerstandorten paarweise erstellt würden. Für jeden virtuellen Tunnel würde die benötigte Bandbreite, sowie die benötigten end-to-end QoS Parameter (erlaubte zeitliche Verzögerungen, Paketeverlust und Latenz) festgelegt. Leider ist diese Lösung nicht nur nicht skalierbar, da die Netzwerkoperatoren für jeden Benutzer ein vollständig vernetztes Netzwerk aus Datentunnels erstellen müsste, sondern die steigende Zahl von Benutzern, die einen solchen Service für den Datentransport in ihrem IP-VPN beanspruchen möchten, würde auch zu einem kaum mehr verwaltbaren komplexen System von end-to-end virtuellen Datentunnels führen. Eine andere Lösung, welche point-to-cloud SLA genannt wird, bietet sich ebenfalls an. In einem solchen SLA sind dem totalen Datenvolumen zu einem Netzwerkbenutzer, der sog. Ingress Committed Rate (ICR) und dem totalen Datenvolumen (Egress Committed Rate (ECR)), welches von einem Netzwerkbenutzer weggeht, end-to-end Quality of Service (QoS) Parameter zugeordnet. Eine point-to-cloud SLA bietet den IP-VPN Benutzern grosse Vorteile, da sie dadurch Datenübertragungen mit garantierten QoS-Parameter von und zu allen möglichen anderen Benutzern im Netz erhalten, ohne dass sie eine komplexe Matrix mit allen benötigten Datenübertragungsstandorten erstellen müssten. Die Unterstützung von solchen SLAs durch IP-Netzwerk-Operatoren verlangt jedoch sehr effiziente und intelligente Ressourcenverwaltungsmechanismen um auch im "worst case" die garantierten QoS-Parameter aufrecht erhalten zu können. Schlussendlich ist darauf hinzuweisen, dass auch die neusten Studien zum effizienten Verwalten von Netzwerkressourcen keinen wirklichen Lösungsansatz zu den genannten Problemen bieten. Als Beispiele dazu können u.a. "Dynamically Forecasting Network Performance Using the Network Weather Service" von R. Wolski (UCSD Technical Report TR-CS96-494-January 1998) oder "A Flexible Model for Resource Management in Virtual Private Networks" von N.G. Duffield et al. (ACM SIGCOMM'99) dienen. Ein weiteres Beispiel dazu dient WO 00 76 148.

Es ist eine Aufgabe der Erfindung, ein neues Verfahren und System zum Verwalten von Netzwerkressourcen in Multiprotokoll-Netzwerken mit protokollspezifischen Datenwegen vorzuschlagen. Insbesondere soll die Lösung eine Skalierbarkeit und Flexibilität wie diese von IP-Netzen besitzen, aber gleichzeitig dem Benutzer QoS Parameter garantieren können, ähnlich den Virtual-Circuit Techniken wie ATM oder Frame Relay.

Gemäss der vorliegenden Erfindung werden diese Ziele insbesondere durch die Merkmale der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zum Verwalten von Netzwerkressourcen in Multiprotokoll-Netzwerken mit protokollspezifischen Datenwegen zu erfassende Datenpakete überprüft werden, den Datenpaketen Kontrolldaten zugeordnet werden und die den Datenpaketen zugeordneten Kontrolldaten anhand von Kontrollfunktionen ausgewertet werden, wobei die Kontrollfunktionen mindestens Kontrollfunktionen zum Verwalten von festgelegten Netzwerkleistungsparameter umfassen, dass die Datenflussmenge für jeden protokollspezifischen Datenweg gemessen wird, dass unter Berücksichtigung der gemessenen Datenflussmenge ein Datenvorhersagemodul die zu erwartende Datenflussmenge einer späteren Zeiteinheit berechnet, dass basierend auf der zu erwartenden Datenflussmenge und/oder den festgelegten Netzwerkleistungsparameter neue protokollspezifische Datenwege mit entsprechender Bandbreite aufgebaut werden und dass die alten Datenwege deaktiviert und durch die neu aufgebauten Datenwege ersetzt werden. Dies hat u.a. den Vorteil, dass die Skalierbarkeit und die Flexibilität von klassischen IP-Netzen mit den Vorteilen von garantierten Quality of Service (QoS) Parametern von Virtual Circuit Technologien verbunden werden können. Die neue Art Netzwerkressourcen zu verwalten, kann bei anderen Netzwerk Technologien bis jetzt so nicht gefunden werden. Insbesondere wird vom Stand der Technik nicht gezeigt, wie Voraussagen für benötigte oder nicht mehr benötigte Netzwerkbandbreiten in der Netzwerkverwaltung eingesetzt werden kann.

In einer Ausführungsvariante werden die Datenwege basierend auf Multi Protokoll Label Switching Techniken durch Label Switched Routers eines IP-Backbone-Netzwerks als Label Switched Paths erstellt. Einer der Vorteile eines Systems oder eines Verfahrens gemäss dieser Ausführungsvariante ist, dass eine bekannte Netzwerktechnologie und Architektur zur Ausführung der Erfindung verwendet wird. Insbesondere sind bei MPLS Netzen die benötigten und/oder garantierten Bandbreiten und anderen QoS Parameter bekannt oder klar festgelegt.

In einer Ausführungsvariante berechnet das Datenvorhersagemodul künftige Datenflussmengen mittels Lokal-Gauss-Verfahren und/oder Neuronalen-Netzwerk-Algorithmen und/oder stochastischen Auto Regressive Integrated Moving Average Modellen. Einer der Vorteile eines Systems oder eines Verfahrens gemäss dieser Ausführungsvariante ist, dass diese Berechnungsverfahren bekannt sind und sich für das erfindungsgemässe Verfahren und/oder System eignen, wie es sich gezeigt hat.

In einer weiteren Ausführungsvariante umfassen die festgelegten Netzwerksleistungsparameter Quality of Service Parameter, wobei die Quality of Service Parameter mindestens Netzverfügbarkeit und/oder maximale zeitliche Varianzen und/oder maximale Latenz und/oder maximale Datenpaketverlustrate und/oder minimaler Datendurchsatz umfassen. Ein System oder ein Verfahren gemäss dieser Ausführungsvariante hat u.a. die gleichen Vorteile, wie die zweite Ausführungsvariante.

In einer weiteren Ausführungsvariante werden die vereinbarten Netzwerksleistungsparameter als Service Level Spezifications und/oder Service Level Objectives in Service Level Agreements zwischen einem Service Provider und dem Netzbenutzer festgelegt, wobei mindestens Netzverfügbarkeit und/oder Latenz und/oder Datenpaketverlustrate und/oder Datendurchsatz festgelegt werden. Einer der Vorteile eines Systems gemäss dieser Ausführungsvariante ist, dass das erfindungsgemässe Verfahren im Rahmen üblicher und/oder bestehender SLA Anwendung findet. Insbesondere hat diese Ausführungsvariante die gleichen Vorteile wie die vorhergehende Ausführungsvariante.

In einer Ausführungsvariante umfassen die Kontrollfunktionen zusätzlich Kontrollfunktionen zur Verrechnung der mit dem Datenverkehr beanspruchten Leistungen. Dabei ist der Anbieter z.B. der Internet-Provider und der Benutzer der entsprechende Netzwerkkunde. Diese Ausführungsvariante hat u.a. den Vorteil, dass die Informationen der Kontrolldaten z.B. von einem integrierten Verrechnungsmodul zur Verrechnung benutzt werden können, ohne dass solche Kontrolldaten noch einmal erstellt werden müssten.

In einer Ausführungsvariante werden bei den protokollspezifischen Datenwegen als Rahmen des Quality-of-Service-Mechanismus Differentiated Services (DiffServ) benutzt, um die Datenflusspriorität festzulegen. Diese Ausführungsvariante hat u.a. den Vorteil, dass durch diese Kombination bekannte und vielbenutzte Mechanismen als Rahmen dienen.

In einer Ausführungsvariante umfassen die Kontrollfunktionen mindestens Funktionen zur Messung der Netzleistung und der effektiven Datendurchsatzrate.

An dieser Stelle soll festgehalten werden, dass sich die vorliegende Erfindung neben dem erfindungsgemässen Verfahren auch auf ein System zur Ausführung dieses Verfahrens bezieht.

Nachfolgend werden Ausführungsvarianten der vorliegenden Erfindung anhand von Beispielen beschrieben. Die Beispiele der Ausführungen werden durch folgende beigelegte Figuren illustriert:
Figur 1 zeigt ein Blockdiagramm, welches den möglichen Aufbau eines vollständig vernetzten MPLS-Netzwerks darstellt, wobei die Label Switched Paths (LSP) durch das Multi Protocol Label Switching verwaltet wird.
Figur 2 zeigt ein Blockdiagramm, welches den möglichen Aufbau eines Verfahrens oder Systems gemäss der vorliegenden Erfindung darstellt, wobei die Ressourcenverwaltung im Rahmen eines MPLS-Netzwerks stattfindet.
Figur 3 zeigt ein Blockdiagramm, welches die mögliche Funktionsweise eines Label Switched Routers (LSR) darstellt, welcher in Kombination mit RSVP (Resource ReSerVation Protocol) implementiert ist.

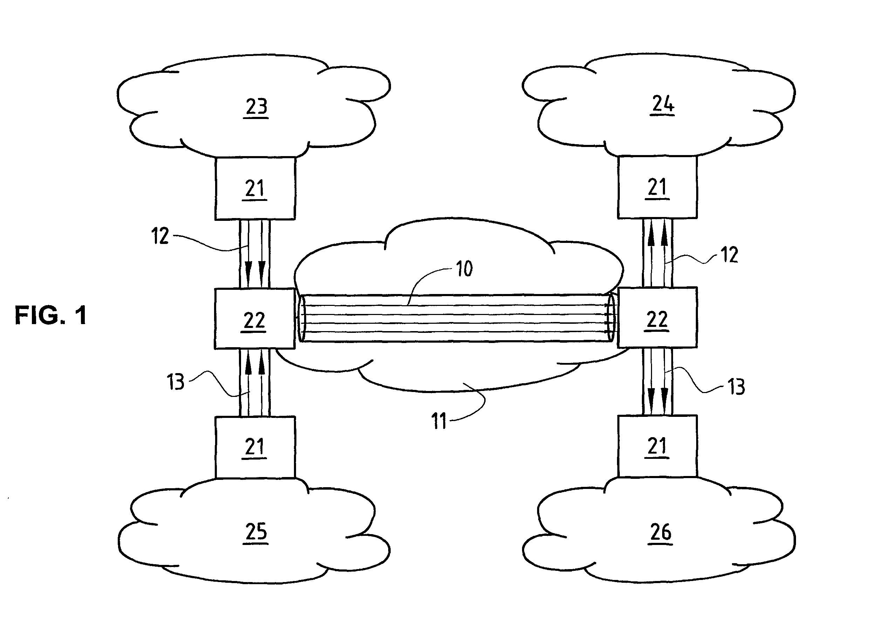

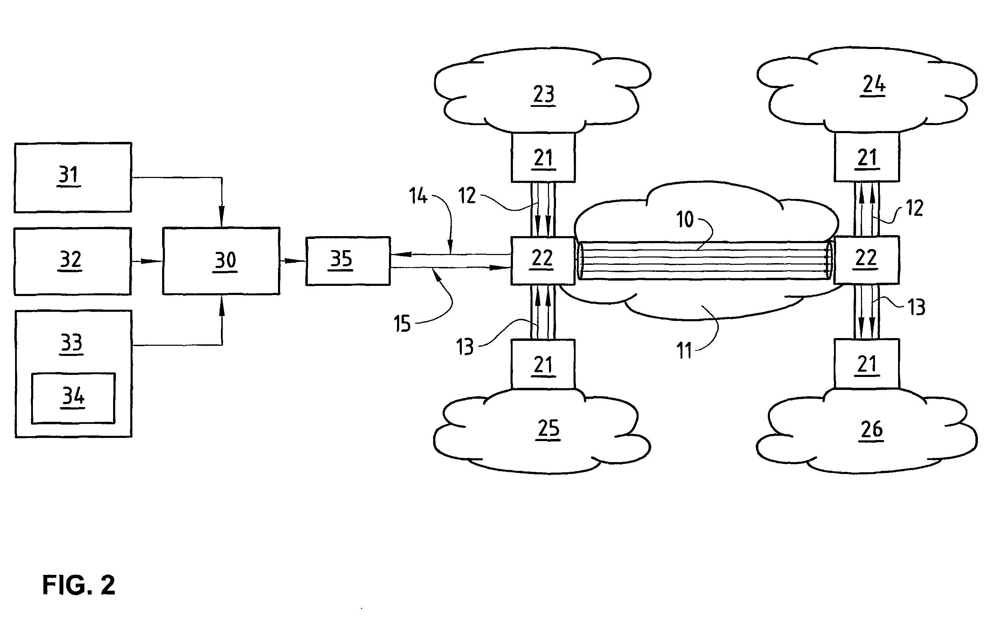

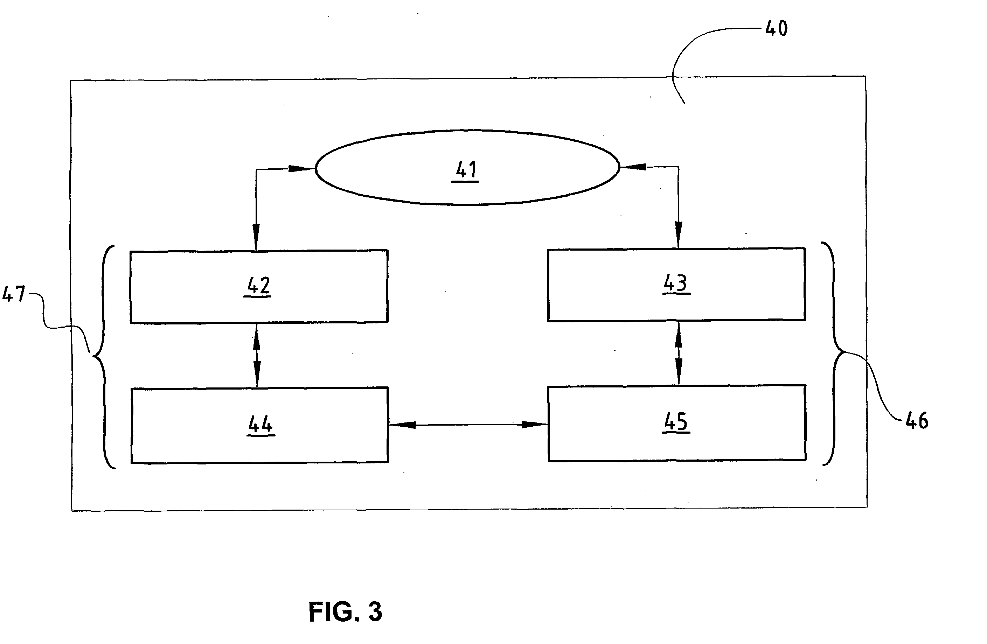

Figur 2 illustriert eine Architektur, die zur Realisierung der Erfindung verwendet werden kann. Das Ausführungsbeispiel basiert auf Multiprotokoll-Netzwerken mit protokollspezifischen Datenwegen. Die Netzwerke können z.B. auf MPLS-Techniken (Multi Protocol Label Switching) mit Label Switched Paths (LSP) Datenwegen beruhen. MPLS kann mit verschiedenen Link-Level Technologien, wie z.B. packet-over-Sonet, Frame-Relay, ATM, Ethernet und Token Ring, arbeiten und diese in Teilnetzwerken überbrücken. MPLS kombiniert 2-Layer Switching-Technik mit 3-Layer Netzwerklayerservices. Die LSP werden in Netzwerken wie z.B. den traditionellen IP-Backbone-Netzwerken durch Label Switched Routers (LSR) erstellt. Figur 3 zeigt eine mögliche Funktionsweise eines LS-Routers 40, wobei das MPLS z.B. mit RSVP (Resource ReSerVation Protocol) implementiert ist 41. RSVP erlaubt die Zuweisung von verschiedenen Servicelevels zu verschiedenen Netzwerkbenutzern. Damit eignet sich RSVP als mögliches Beispiel zur expliziten Vergabe von Netzwerkressourcen an unterschiedliche Netzwerkbenutzer in diesem Verfahren. Die Spezifikationen von RSVP können z.B. in Braden, R., Ed., Zhang, L., Estrin, D., Herzog, S., and S. Jamin RFC 2205 (Parameters in RFC 2210), September 1997 entnommen werden. Mittels RSVP können bestimmte QoS vom Netz verlangt werden. Bei grossen Netzwerken ist eine statische Routenwahl für die LSP Pfadwahl mittels durch den Netzwerkverwalter manuell erzeugte Routenwahl-Tabellen praktisch nicht mehr möglich. In diesem Verfahren werden die Routenwahl-Tabellen durch die Router dynamisch z.B. mit Hilfe von Routenwahl-Protokollen und/oder IGP (Interior Gateway Protocol) erzeugen. Mit den Protokollen werden insbesondere zwischen den Routern Informationen über die Anzahl der verbundenen Netznummern und über die Performance der Routen entsprechend der Netze ausgetauscht. Sobald eine Änderung auftritt, werden die Tabellen aktualisiert. D.h. die Routenwahl-Protokolle dienen nicht dazu, die Routen festzulegen, sondern Informationen über verfügbare Routen und teilweise auch deren Performance auszutauschen. Wie in Figur 3 illustriert, können die LSR-Tabellen z.B. eine Datenbank 44 umfassen, welche die momentane Topologie des Netzes beinhaltet, und eine Datenbank 45, welche den Status der Links beinhaltet. Ein konventioneller IGP-Prozess 43 kann zusammen mit der Linkstatus-Datenbank 45 zur Berechnung 46 der möglichen Netzwerkrouten über die verfügbaren Router dienen, während mittels dem Routingprozess 42 und der Topologie-Datenbank 44 die möglichen LSP-Pfade entsprechend eines gewählten Netzwerkweges berechnet werden 47. In dem Ausführungsbeispiel überprüft eine Datenerfassungseinheit 35 oder Packet Tracker die zu erfassenden Datenpakete und ordnet den Datenpaketen Kontrolldaten zu (z.B. benötigte Netzwerkleistung, effektive Datendurchsatzrate etc.). Beispielsweise kann die Überprüfung auch die Analyse von RTCP-Datenpaketen (Realtime-Kontrollprotokoll) umfassen, um Realtime-Dienste wie VolP (Voice over IP) und/oder Video-Streaming zu erfassen. Da in den meisten Fällen davon ausgegangen werden kann, dass eine Verrechnung der Leistungen im Netz, z.B. einem IP-Netz, notwendig ist, wenn der Netzwerkoperator abgestufte Leistungsangebote in einer solchen IP-VPN Lösung (IP Virtual Private Network) anbieten will, können die zu erfassenden Datenpakete auch gleichzeitig die zu verrechnenden Datenpakete sein. Die Verrechnung würde in diesem Fall z.B. zwischen dem Internetprovider und dem Netzwerkbenutzer stattfinden. Die den Datenpaketen zugeordneten Kontrolldaten werden mittels eines Vermittlungsmoduls anhand von Kontrollfunktionen ausgewertet, wobei die Kontrollfunktionen mindestens Kontrollfunktionen zum Verwalten von festgelegten Netzwerksleistungsparameter umfassen. Die festgelegten Netzwerksleistungsparameter können u.a. Quality of Service (QoS) Parameter umfassen, wobei die Quality of Service Parameter beispielsweise Netzverfügbarkeit und/oder maximale zeitliche Varianzen und/oder maximale Latenz und/oder maximale Datenpaketverlustrate und/oder minimaler Datendurchsatz umfassen. Die QoS-Parameter können z.B. in Service Level Agreements als Service Level Spezifications (SLS) und/oder Service Level Objectives (SLO) zwischen einem Service Provider und dem Netzbenutzer festgelegt worden sein. Typische SLS sind u.a. Netzverfügbarkeit und/oder Latenz und/oder Datenpaketverlustrate und/oder Datendurchsatz. Ein Datenvorhersagemodul 34 bestimmt in diesem Ausführungsbeispiel mittels der Kontrolldaten die Datenflussmenge für jeden protokollspezifischen Datenweg, z.B. jeden MPLS LSP, und berechnet unter Berücksichtigung der gemessenen Datenflussmenge die zu erwartende Datenflussmenge für eine spätere Zeiteinheit. Die Messung der Netzleistung und der effektiven Datendurchsatzrate kann z.B. zur Berechnung der zu erwartende Datenflussmenge bereits genügen. Das Datenvorhersagemodul 34 kann zur Bestimmung der künftigen Datenflussmengen z.B. Verfahren wie Lokal-Gauss-Verfahren und/oder Neuronalen-Netzwerk-Algorithmen und/oder stochastischen Auto Regressive Integrated Moving Average Modellen verwenden. Die berechneten Werte der zu erwartenden Datenflussmenge werden an ein oder mehrere Ressourcenverwaltungsmodule 33 übergeben, welche Ressourcenverwaltungsmodule 33 basierend auf der zu erwartenden Datenflussmenge und/oder den festgelegten Netzwerksleistungsparameter neue protokollspezifische Datenwege mit entsprechender Bandbreite aufbauen. Es ist darauf hinzuweisen, dass mehrere protokollspezifische Datenwege zu einem Datenweg zusammengefasst werden können. Die Datenwege können nicht nur anhand der verwendeten Protokolle eigeteilt sein, sondern z.B. auch basierend auf ihrer Herkunfts- und/oder Zieladresse. Die alten Datenwege werden durch ein oder mehrere Ressourcenverwaltungsmodule 33 deaktiviert und durch die neu aufgebauten Datenwege ersetzt. Um die Datenflusspriorität im Netzwerk festzulegen, können z.B. Differentiated Service (DiffServ) Verfahren verwendet werden. DiffServ ist ein von der IETF (Internet Engineering Task Force) der ISOC (Internet SOCiety) spezifizierter QoS-Mechanismus, welcher Datenströme in einem oder mehreren Netzwerken handhaben kann. Unter DiffServ wird der Status der Datenpakete durch Bits im IP-Header beschrieben, was diesen QoS-Mechanismus skalierbar und geeignet für end-to-end Quality of Services macht, insbesondere für den hier vorgeschlagenen Verwendungszweck. Verfahrensweise und Implementation werden bei DiffServ lokalen "trusted" Domains überlassen. DiffServ ermöglicht Service Differentiation, indem es Service Klassen von verschiedener Priorität erzeugt. Standardmässig werden dabei entweder das TOS (Type-Of-Service) Feld von IPv4 (Internet Protocol version 4) oder die Prioritätsbits des IPv6-Headers (Internet Protocol version 6) benutzt. Es ist zu erwähnen, dass IPv4 mit seinem IP Precedence/CBQ und TOS-Feld zwar einige einfache Klassifizierungsmechanismen besitzt, aber erst IPv6 besitzt ein Class-Header Feld, das explizit zum Bezeichnen verschiedener Serviceklassen (Class of Services) bestimmt ist. Das Class-Header Feld von IPv6 ist eine Erweiterung zum IP Precedence/CBQ Feld von IPv4, weshalb bei IPv4 das TOS Feld benutzt wird. Als Referenz zu DiffServ können u.a. die beiden Publikationen "An Expedited Forwarding PHB" von V. Jacobson et. al. (RFC 2598, Juni 1999) und "Assured Forwarding PHB Group" von J. Heinanen et. al. (RFC 2597, Juni 1999) dienen. Neben DiffServ können auch andere Protokolle zur Unterstützung der QoS-Mechanismen wie COPS (Common Open Policy Service Protocol), RADIUS (Remote Authentication Dial In User Service), RSVP (Resource ReSerVation Protocol), IntServ (Integrated Services Achitekture), ISSLL (Integrated Services over Specific Link Layers), DSSLL (Differentiated Services over Specific Link Layers) und/oder IPSEC (IP Security Protocol) verwendet werden. Wird die vorliegende Erfindung in einem Netz mit LSP, welche MPLS-Datenverkehr unterstützen, realisiert, so kann es nützlich sein, ein point-to-cloud IP-VPN SLA anzubieten. Mit einer point-to-cloud IP-VPN SLA ist es nämlich nicht am Benutzer, Reservationen bezüglich Netzleistungsparameter selbst zu machen, sondern die Reservationen können dynamisch und für den Benutzer automatisch, d.h. ohne sein Eingreifen, gemacht werden, was eine Eigenschaft der Erfinung ist. Solche point-to-cloud IP-VPN SLA werden deshalb von der Erfindung optimal unterstützt. Es ist aber darauf hinzuweisen, dass sich auch point-to-point SLA in das Verfahren der Erfindung integrieren und damit realisieren lassen. In diesem Fall werden z.B. die Datenwege so gewählt, dass ein vorhandener, nichtbenutze Buffer von Netzwerkbandbreite innerhalb eines Datenwegs mindetens der aufaddierten, nicht benutzten Bandbreite aller in einen bestimmten Datenweg integrierten point-to-point SLAs entspricht. Obwohl point-to-point SLAs der vorliegenden Erfindung nicht optimal unterstützen, lassen sich auch point-to-point SLA mit der Erfindung handhaben, ohne dass sie durch ihre statische Art irgendwelche Konflikte auszulösen. Damit können bestehende Lösungen basierend auf point-to-point SLAs in ein erfindungsgemässes System übernommen und weitergeführt werden. In dem hier beschirebenen Ausführungsbeispiel wird jeder Netzwerkbenutzer über seine Teilnehmereinrichtung (Customer Premise Equipment (CPE)) 21 über ein oder mehrere physikalische Links an ein sog. Provider Edge (PE) Router 22 angeschlossen. Eine spezielle Weitergabetabelle wird an jedem PE-Router 22 abgespeichert, zu welchem die Netzwerkbenutzer verbunden sind. Unter Benutzung dieser Weitergabetabelle werden Datenpakete zuerst zwischen dem CPE 21 und dem PE 22 und dann zwischen den verschiedenen PEs 22 ausgetauscht. Für jede unterschiedliche Region besitzt der IP-Netzwerkoperator einen sog. Point of Presence (PoP), welcher physikalisch durch einen PE Router 22 implementiert ist. Um die Verbindung zwischen allen Regionen zu ermöglichen, wird ein vollständig vernetztes Netzwerk von MPLS 10 unterstützenden LSP zwischen allen PEs 22 erstellt. Figur 1 zeigt ein Beispiel eines solchen point-to-cloud IP-VPN Netzwerkes über ein MPLS Backbone. Die CPEs 21 sind dabei mit den PE Routers 22 verbunden und schicken Datenpakete über die entsprechenden Datenkanäle 12/13 oder empfangen Datenpakete über die Datenkanäle 12/13. Die Referenznummern 12 und 13 bezeichnen zwei unterschiedliche VPN-Verbindungen zum Backbone 11. Die Benutzersites 23, 24, 25 oder 26 befinden sich in diesem Beispiel in einem der VPN A/B, wobei die Sites 23 und 24 in einem gleichen VPN A sitzen und die Sites 25 und 26 in einem anderen VPN B sitzen. Die PE Router 22 sind über ein MPLS Backbone 11 via MPLS Label Switched Paths 10 miteinander verbunden. Einer der Vorteile dieser Lösung ist, dass nur eine verhältnismässig kleine Anzahl MPLS LSP verwaltet werden muss. Ebenso kann es vom Standpunkt des Netzwerkbenutzers aus als Vorteil betrachtet werden, dass er die ganze Problematik des Routing-Konfigurieren, Datentunnel erstellen und -unterhalten, an den IP-Netzwerkoperator outsourcen kann. Alle Datenströme des IP-Backbones sammeln sich beim PE 22 und werden den verschiedenen DiffServ Leistungsklassen (Classes of Services (CoS)) entsprechend ihrer festgelegten QoS-Parameter zugeordnet. In diesem Verfahren werden den Datenpaketen beim CPE 21 durch das Konfigurieren des IP-Vorrangfeldes im Dateikopf eine CoS zugewiesen. Der PE Router 22 erstellt so viele MPLS Tunnels 10, wie CoS existieren um die Service Differentiation zu unterstützen. Nur eine kleine Anzahl von CoS werden im Backbone unterstützt, so dass die Datenströme der Netzwerkbenutzer in die selbe Region am einem MPLS LSP vervielfacht werden, falls sie zum gleichen CoS gehören und zum selben PE 22 unterwegs sind.

Eine der Schwierigkeiten ist, die benötigte Bandbreite für jeden MPLS LSP abzuschätzen bzw. zu berechnen. Tatsächlich wächst die Zahl der Endpunkte pro IP-VPN sehr schnell und das Muster der Datenströme wird sehr schnell schwierig vorherzusagen. Weiter könnte eine einfach Ersetzung der gemieteten Leitungen (virtuelle oder physikalische Leitungen) durch MPLS-Tunnels zwischen den PE Routers 22 mit der höchsten Kapazität vorgeschlagen werden, indem man annimmt, dass alle CEPs 21 der Netzwerkbenutzer paarweise eine end-to-end Verbindung mit der höchsten Kapazität von gemieteten Leitungen benötigen. Eine solche Lösung ergibt einen hohen Grad von Unterbelastung für die angelegten Netzwerkressourcen. Weiter ist eine solche Lösung deshalb ungenügend, da Netzwerkbenutzer vielmehr eine dynamische Verbindung mit flexiblen Bandbreitenreservationen zwischen ihren Netzwerkendpunkten benötigen, als statisch reservierte Bandbreiten. Zudem können oder wollen die Netzwerkbenutzer meistens die benötigte Bandbreite zwischen jeden paarweisen CEP 21 und für jeden CEP 21 nicht selber abschätzen (in den meisten Fällen wäre es ohnehin für die Netzbenutzer kaum mehr möglich, eine Sache von solcher Komplexität zu handhaben). Wie erwähnt nehmen wir als Beispiel für diese Ausführungsvariante (Figur 2) das point-to-cloud SLA Model. In dem bis jetzt beschriebenen Model (Figur 1) kann das Netzwerk 11 immer mehr Datenverkehr aufnehmen, solange der verschickte bzw. empfangene Datenverkehr 12/13 für ein CEP 21 pro CoS eine bestimmte Zugangs- bzw. Ausgangsrate nicht überschreitet. Es kann, wie ebenfalls bereits erwähnt, basierend auf diesem Model für den Netzwerkbenutzer sehr nützlich sein, einen IP-VPN SLA anzubieten, da die Leistungen mit dem Benutzer und für den Benutzer einfach vereinbart werden können und vom Benutzer nicht verlangt werden muss, mit komplexen Datenverkehrsmatrizen umzugehen. Die Kehrseite der Medaille ist, dass der Netzwerkoperator fähig sein muss, die benötigten Bandbreiten im Netz zu beschaffen und zu reservieren um den SLA zu garantieren. Ohne weitere Hilfe ist es für den Netzwerkoperator kaum möglich, die Verkehrsaufteilung im Backbone-Netz 11 herauszufinden. In der vorliegenden Ausführungsvariante (Figur 2) wird in einem ersten Schritt von der "worst case" Situation ausgegangen. Es werden somit MPLS LSP zwischen allen PE Routers 22 mit der höchst möglichen Bandbreite erstellt, d.h. ohne die effektive Datenverkehrsaufteilung und das effektive Datenverkehrsmuster des Netzes zu berücksichtigen. In einem zweiten Schritt wird jetzt, um eine enorme Unterbenutzung der angelegten Netzwerkressourcen zu vermeiden, die momentane Grösse des Datenverkehrs dazu verwendet, um die benötigten Bandbreiten für jeden MPLS LSP 10 zu einer späteren Zeiteinheit zu berechnen und die zugeteilten Bandbreiten des angelegten Datennetzwerktunnels 10 in ihrer Grösse anzupassen, was zu einer besseren Auslastung des Netzes und zu einem ausgeglicheneren Datenload im Netz führt. Wie am Anfang des Ausführungsbeispiels beschrieben ist, ist es auch im MPLS Backbone notwendig, um das SLA z.B. für real-time Applikationen oder Dienste (wie Voice over IP (VolP), Video Streaming etc.) und damit die vereinbarten Netzleistungen garantieren zu können, dass die QoS-Parameter im Netz überprüft werden. In Figur 2 sind die weiter oben beschriebenen Module wie folgt referenziert: Datenerfassungseinheit 35, Datenvorhersagemodul 34, Vermittlungsmodul 30. Die Datenerfassungseinheit 35 überprüft die zu erfassenden und/oder zu verrechnenden IP-Datenpakete 14. Das Datenvorhersagemodul 34 ist in diesem Ausführungsbeispiel Teil eines Ressourcenverwaltungsmoduls 33. Die Verrechnung geschieht über ein IP-Verrechnungsmodul 32. Das System kann zusätzlich ein Performance-Monitoring-Modul 31 umfassen, welches zum Überwachen und Aufzeichnen der Netzwerkleistung dient. Basierend auf den Berechnungen des Ressourcenverwaltungsmoduls 33 werden dann die neuen MPLS Konfigurationsanweisungen 15 an die PE Routers 22 geschickt. Der übrige Teil von Figur 2 entspricht dem Netzwerk von Figur 1 und wurde bereits beschrieben.

## Patentansprüche

1. Verfahren zum Verwalten von Netzwerkressourcen in Multiprotokoll-Netzwerken mit protokollspezifischen Datenwegen, bei welchem Verfahren zu erfassende Datenpakete überprüft werden, den Datenpaketen Kontrolldaten zugeordnet werden und die den Datenpaketen zugeordneten Kontrolldaten anhand von Kontrollfunktionen auswertet werden, wobei die Kontrollfunktionen mindestens Kontrollfunktionen zum Verwalten von festgelegten Netzwerksleistungsparametern umfassen, **dadurch gekennzeichnet,**
**dass** die Datenflussmenge für jeden protokollspezifischen Datenweg gemessen wird,
**dass** unter Berücksichtigung der gemessenen Datenflussmenge ein Datenvorhersagemodul die zu erwartende Datenflussmenge einer späteren Zeiteinheit berechnet,
**dass** basierend auf der zu erwartenden Datenflussmenge und/oder den festgelegten Netzwerksleistungsparameter neue protokollspezifische Datenwege mit entsprechender Bandbreite aufgebaut werden, und
**dass** die alten Datenwege deaktiviert und durch die neu aufgebauten Datenwege ersetzt werden.

2. Verfahren nach Anspruch 1, **dadurch gekennzeichnet, dass** die Datenwege basierend auf Multi Protokoll Label Switching Techniken durch Label Switched Routers eines IP-Backbone-Netzwerk als Label Switched Paths erstellt werden.

3. Verfahren nach Anspruch 1 oder 2, **dadurch gekennzeichnet, dass** das Datenvorhersagemodul künftige Datenflussmengen mittels Lokal-Gauss-Verfahren und/oder Neuronalen-Netzwerk-Algorithmen und/oder stochastischen Auto Regressive Integrated Moving Average Modellen berechnet.

4. Verfahren nach einem der Ansprüche 1 bis 3, **dadurch gekennzeichnet, dass** die festgelegten Netzwerksleistungsparameter Quality of Service Parameter umfassen, wobei die Quality of Service Parameter mindestens Netzverfügbarkeit und/oder maximale zeitliche Varianzen und/oder maximale Latenz und/oder maximale Datenpaketverlustrate und/oder minimaler Datendurchsatz umfassen.

5. Verfahren nach einem der Ansprüche 1 bis 4, **dadurch gekennzeichnet, dass** die vereinbarten Netzwerksleistungsparameter als Service Level Spezifications und/oder Service Level Objectives in Service Level Agreements zwischen einem Service Provider und dem Netzbenutzer festgelegt werden, wobei mindestens Netzverfügbarkeit und/oder Latenz und/oder Datenpaketverlustrate und/oder Datendurchsatz festgelegt werden.

6. Verfahren nach einem der Ansprüche 1 bis 5, **dadurch gekennzeichnet, dass** die Kontrollfunktionen zusätzlich Kontrollfunktionen zur Verrechnung der mit dem Datenverkehr beanspruchten Leistungen umfassen.

7. Verfahren nach einem der Ansprüche 1 bis 6, **dadurch gekennzeichnet, dass** bei den protokollspezifischen Datenwegen als Rahmen des Quality-of-Service-Mechanismus Differentiated Services benutzt werden, um die Datenflusspriorität festzulegen.

8. Verfahren nach einem der Ansprüche 1 bis 7, **dadurch gekennzeichnet, dass** die Kontrollfunktionen mindestens Funktionen zur Messung der Netzleistung und der effektiven Datendurchsatzrate umfassen.

9. System für das Verwalten von Netzwerkressourcen in Multiprotokoll-Netzwerken mit protokollspezifischen Datenwegen, welches System eine Datenerfassungseinheit, die zu erfassende Datenpakete überprüft und den Datenpaketen Kontrolldaten zuordnet, sowie ein Vermittlungsmodul umfasst, welches Vermittlungsmodul die den Datenpaketen zugeordneten Kontrolldaten anhand von Kontrollfunktionen auswertet, wobei die Kontrollfunktionen mindestens Kontrollfunktionen zum Verwalten von festgelegten Netzwerksleistungsparameter umfasst, **dadurch gekennzeichnet,**
**dass** das System ein Datenvorhersagemodul umfasst, welches mittels durch das Vermittlungsmodul berechnete Parameter für die Datenflussmenge jedes protokollspezifischen Datenweges, die zu erwartende Datenflussmenge einer späteren Zeiteinheit berechnet, und
**dass** das System ein oder mehrere Ressourceverwaltungsmodule umfasst, welche basierend auf der zu erwartenden Datenflussmenge und/oder den festgelegten Netzwerksleistungsparameter neue protokollspezifische Datenwege mit entsprechender Bandbreite aufbauen, die alten Datenwege deaktivieren und durch die neu aufgebauten Datenwege ersetzen.

10. System nach Anspruch 9, **dadurch gekennzeichnet, dass** das Netzwerk ein IP-Backbone-Netzwerk mit auf Multi Protokoll Label Switching basierenden Label Switched Routers umfasst und die Datenwege entsprechende Label Switched Paths sind.

11. System nach Anspruch 9 oder 10, **dadurch gekennzeichnet, dass** das Datenvorhersagemodul künftige Datenflussmengen mittels Berechnungsmodulen basierend auf Lokal-Gauss-Verfahren und/oder Neuronalen-Netzwerk-Algorithmen und/oder stochastischen Auto Regressive Integrated Moving Average Modellen umfasst.

12. System nach einem der Ansprüche 9 bis 11, **dadurch gekennzeichnet, dass** die festgelegten Netzwerksleistungsparameter Quality of Service Parameter umfassen, wobei die Quality of Service Parameter mindestens Netzverfügbarkeit und/oder maximale zeitliche Varianzen und/oder maximale Latenz und/oder maximale Datenpaketverlustrate und/oder minimalen Datendurchsatz umfassen.

13. System nach einem der Ansprüche 9 bis 12, **dadurch gekennzeichnet, dass** die vereinbarten Netzwerksleistungsparameter als Service Level Spezifications und/oder Service Level Objectives in Service Level Agreements zwischen einem Service Provider und dem Netzbenutzer festgelegt sind, wobei mindestens Netzverfügbarkeit und/oder Latenz und/oder Datenpaketverlustrate und/oder Datendurchsatz festgelegt werden.

14. System nach einem der Ansprüche 9 bis 13, **dadurch gekennzeichnet, dass** die Kontrollfunktionen zusätzlich Kontrollfunktionen zur Verrechnung der mit dem Datenverkehr beanspruchten Leistungen umfassen.

15. System nach einem der Ansprüche 9 bis 14, **dadurch gekennzeichnet, dass** die ein oder mehreren Ressourceverwaltungsmodule Differentiated Services umfassen, mittels welchen bei den protokollspezifischen Datenwegen als Rahmen des Quality-of-Service-Mechanismus die Datenflusspriorität festlegbar ist.

16. System nach einem der Ansprüche 9 bis 15, **dadurch gekennzeichnet, dass** die Kontrollfunktionen mindestens Funktionen zur Messung der Netzleistung und der effektiven Datendurchsatzrate umfassen.

## Claims

1. Method of managing network resources in multi-protocol networks with protocol-specific data paths, in which method data packets to be captured are checked, control data is assigned to said data packets, and the control data assigned to said data packets is evaluated on the basis of control functions, the control functions comprising at least control functions for managing determined network performance parameters, **characterised**
**in that** the data flow rate is measured for each protocol-specific data path,
**in that** a data forecast module calculates the expected data flow rate for a later unit of time taking into account the measured data flow rate,
**in that** based on the expected and/or determined network performance parameters, new protocol-specific data paths with corresponding bandwidth are established, and
**in that** the old data paths are deactivated and replaced by the newly established data paths.

2. Method according to claim 1, **characterised in that** based on multi-protocol label switching techniques, the data paths are created as label switched paths by label switched routers of an IP backbone network.

3. Method according to claim 1 or 2, **characterised in that** the data forecast module calculates future data flow rates by means of local Gauss methods and/or neural network algorithms and/or stochastic auto regressive integrated moving average models.

4. Method according to one of the claims 1 to 3, **characterised in that** the determined network performance parameters comprise quality of service parameters, the quality of service parameters including at least network availability and/or maximal time variances and/or maximal latency and/or maximal data packet loss rates and/or minimal data throughput.

5. Method according to one of the claims 1 to 4, **characterised in that** the agreed-upon network performance parameters are established as service level specifications and/or service level objectives in service level agreements between a service provider and the network user, at least network availability and/or latency and/or data packet loss rates and/or data throughput being established.

6. Method according to one of the claims 1 to 5, **characterised in that** the control functions further comprise control functions for billing the services availed of with the data communication.

7. Method according to one of the claims 1 to 6, **characterised in that** used as the framework of the quality of service mechanism in the case of the protocol-specific data paths are differentiated services in order to establish the data flow priority.

8. Method according to one of the claims 1 to 7, **characterised in that** the control functions comprise at least functions for measurement of the network performance and of the actual data throughput rates.

9. System for managing network resources in multi-protocol networks with protocol-specific data paths, which system comprises a data capturing unit which checks the data packets to be captured and assigned control data to the data packets, as well as a mediation module which mediation module evaluates the control data assigned to the data packets on the basis of control functions, the control functions including at least control functions for managing determined network performance parameters, **characterised**
**in that** system comprises a data forecast module which calculates the data flow rate to be expected for a later unit of time by means of parameters, calculated by the mediation module, for the data flow rate of each protocol-specific data path, and
**in that** the system comprises one or more resource administration modules which, based on the data flow rate to be expected and/or the determined network performance parameters, establish new protocol-specific data paths with corresponding bandwidth, deactivate the old data paths and replace them with the newly established data paths.

10. System according to claim 9, **characterised in that** the network comprises an IP backbone network with label switched routers based on multi-protocol label switching, and the data paths are corresponding label switched paths.

11. System according to claim 9 or 10, **characterised in that** the data forecast module includes future data flow rates by means of calculation modules based on local Gauss methods and/or neural network algorithms and/or stochastic auto regressive integrated moving average models.

12. System according to one of the claims 9 to 11, **characterised in that** the determined network performance parameters comprise quality of service parameters, the quality of service parameters including at least network availability and/or maximal time variances and/or maximal latency and/or maximal data packet loss rates and/or minimal data throughput.

13. System according to one of the claims 9 to 12, **characterised in that** the agreed-upon network performance parameters are established as service level specifications and/or service level objectives in service level agreements between a service provider and the network user, at least network availability and/or latency and/or data packet loss rates and/or data throughput being established.

14. System according to one of the claims 9 to 13, **characterised in that** the control functions further comprise control functions for billing the services availed of with the data communication.

15. System according to one of the claims 9 to 14, **characterised in that** one or more resource administration modules include differentiated services by means of which the data flow priority is able to be established in the case of the protocol-specific data paths as the framework of the quality of service mechanism.

16. System according to one of the claims 9 to 15, **characterised in that** the control functions comprise at least functions for measurement of the network performance and the actual data throughput rate.

## Revendications

1. Procédé pour la gestion de ressources de réseau dans des réseaux à multiprotocole avec des chemins de données spécifiques au protocole, procédé dans lequel des paquets de données à saisir sont vérifiés, les paquets de données sont associés aux données de contrôle et les données de contrôle associées aux paquets de données étant analysées à l'aide de fonctions de contrôle, les fonctions de contrôle comprenant au moins des fonctions de contrôle pour la gestion de paramètres de performance de réseaux déterminés, **caractérisé**
**en ce que** la quantité de flux de données est mesuré pour chaque chemin de données spécifique à un protocole,
**en ce qu'**en tenant compte de la quantité de flux de données, un module de prévision de données calcule la quantité de flux de données d'une unité de temps ultérieure,
**en ce qu'**en se basant sur la quantité de flux de données prévisible et/ou sur les paramètres de performance de réseau fixés, de nouveaux chemins de données avec des largeurs de bande correspondantes sont établis, et
**en ce que** les anciens chemins de données sont désactivés et sont remplacés par les nouveaux chemins de données établis.

2. Procédé selon la revendication 1, **caractérisé en ce que** les chemins de données sont établis en se basant sur des techniques de commutation à multiprotocole par étiquette au moyen d'un routeur à commutation par étiquette d'un réseau fédérateur IP, en tant que chemins à commutation par étiquettes.

3. Procédé selon la revendication 1 ou 2, **caractérisé en ce que** le module de prévision de données calcule des débits de données au moyen de procédés locaux de Gauss et/ou des algorithmes de réseaux neuronaux et/ou des modèles de moyennes mobiles intégrées autorégressives stochastiques.

4. Procédé selon l'une des revendications 1 à 3, **caractérisé en ce que** les paramètres déterminés de performance de réseau comprennent des paramètres de qualité de service (Quality of Service), les paramètres de qualité de service comprenant au moins la disponibilité du réseau et/ou des variances maximales de temps et/ou des latences maximales et/ou des débits maximaux de pertes de données et/ou un débit minimal de données.

5. Procédé selon l'une des revendications 1 à 3, **caractérisé en ce que** les paramètres convenus de performances de réseaux sont déterminés en tant que spécifications de niveau de service (Service Level Specification)et/ou d'objectifs de niveau de service (Service Level Objectives) dans des contrats de niveau de service (Service Level Agreements) entre un fournisseur de services et l'utilisateur du réseau, au moins la disponibilité du réseau et/ou la latence et/ou le degré de perte de paquets de données et/ou le débit de donnés étant fixés.

6. Procédé selon l'une des revendications 1 à 5, **caractérisé en ce que** les fonctions de contrôle comprennent en plus des fonctions de contrôle pour la facturation des prestations sollicitées par le trafic de données.

7. Procédé selon l'une des revendications 1 à 6, **caractérisé en ce que** dans les chemins de données spécifiques à un protocole des services différentiés (Differentiated Services) sont utilisés en tant que cadre du mécanisme de qualité de service pour déterminer la priorité du flux de données.

8. Procédé selon l'une des revendications 1 à 7, **caractérisé en ce que** les fonctions de contrôle comprennent au moins des fonctions pour la mesure de la puissance du réseau et de la capacité effective.

9. Système pour la gestion de ressources réseau dans des réseaux à multiprocole avec des chemins de données spécifiques au protocole, système qui comprend une unité de saisie de données, qui vérifie les paquets de données à saisir, et associe aux paquets de données des données de contrôle ainsi qu'un module de commutation, module de commutation qui analyse les données de contrôle associées aux paquets de données à l'aide de fonctions de contrôle, les fonctions de contrôle comprenant au moins des fonctions de contrôle pour la gestion de paramètres de performance de réseaux déterminés, **caractérisé**
**en ce que** le système comprend un module de prévision de données qui calcule au moyen des paramètres calculés par le module de commutation, pour la quantité de flux de données de chaque chemin de données spécifique à un protocole la quantité de flux de données prévisible d'une unité de temps ultérieure, et
**en ce que** le système comprend un ou plusieurs modules de gestion de ressources lesquels établissent en se basant sur la quantité de flux de données prévisible et/ou sur les paramètres de performance de réseaux déterminés, de nouveaux chemins de données spécifiques à un protocole avec une largeur de bande correspondante qui désactivent chemins de données.

10. Système selon la revendication 9, **caractérisé en ce que** le réseau comprend un réseau fédérateur IP avec des routeurs à commutation par étiquette en se basant sur la commutation multiprotocole par étiquette et **en ce que** les chemins de données sont des chemins correspondants à commutation par étiquette.

11. Système selon la revendication 9 ou 10, **caractérisé en ce que** le module de prévision de données comporte des quantités de flux de données futures au moyen de modules de calcule se basant sur le procédé local de Gauss et/ou des algorithmes neuronaux de réseau et/ou des modèles stochastiques de moyennes mobiles intégrées autorégressives (Auto Regressive Integrated Moving Average).

12. Procédé selon l'une des revendications 9 à 11, **caractérisé en ce que** les paramètres déterminés de performance de réseau comprennent des paramètres de qualité de service (Quality of Service), les paramètres de qualité de service comprenant au moins la disponibilité du réseau et/ou des variances maximales de temps et/ou des latences maximales et/ou des débits maximaux de perte de données et/ou un débit minimal de données.

13. Procédé selon l'une des revendications 9 à 12, **caractérisé en ce que** les paramètres convenus de performances de réseaux sont déterminés en tant que spécifications de niveau de service (Service Level Specification)et/ou d'objectifs de niveau de service (Service Level Objectives) dans des contrats de niveau de service (Service Level Agreements) entre un fournisseur de service et l'utilisateur de réseau, au moins la disponibilité du réseau et/ou la latence et/ou le degré de perte de paquets de données et/ou la capacité des données étant fixés.

14. Procédé selon l'une des revendications 9 à 13, **caractérisé en ce que** les fonctions de contrôle comprennent en plus des fonctions de contrôle pour la facturation des prestations sollicitées par le trafic de données.

15. Procédé selon l'une des revendications 9 à 14, **caractérisé en ce qu'**un ou plusieurs modules de gestion de ressources comprennent des services différentiés (Differentiated Services) au moyen desquels dans les chemins de données spécifiques à un protocole la priorité du flux de données est déterminable en tant que cadre du mécanisme de qualité de service.

16. Procédé selon l'une des revendications 9 à 15, **caractérisé en ce que** les fonctions de contrôle comprennent au moins des fonctions pour la mesure de la puissance du réseau et de la capacité effective.
